# EUROPEAN PATENT APPLICATION

(11) **EP 4 310 565 A1**
(43) Date of publication of application: **24.01.2024**
(21) Application number: 22823912.5
(22) Date of filing: 26.04.2022
(51) Int. Cl.: G02B 6/44

(54) **OPTICAL CABLE**

(30) Priority: 16.06.2021 CN 202110665310
(71) Applicant: Huawei Technologies Co., Ltd., Longgang Shenzhen, Guangdong 518129 (CN)
(72) Inventor: LIAO, Yuancai, Shenzhen, Guangdong 518129 (CN); LAI, Jianfei, Shenzhen, Guangdong 518129 (CN); LI, Hanguo, Shenzhen, Guangdong 518129 (CN)
(74) Representative: Pfenning, Meinig & Partner mbB
(86) International application number: PCT/CN2022/089146
(87) International publication number: WO 2022/262427

(57) **Abstract**

An optical cable is provided, including an outer sheath (100), a main optical fiber, (200), and at least two strength members (300). The main optical fiber (200) and the strength members (300) are all located inside the outer sheath (100). In addition, the main optical fiber (200) and the strength members (300) have a same extension direction. At least two strength members (300) are spaced apart on an outer periphery of the main optical fiber (200), and at least one strength member (300) is an auxiliary optical fiber. At least one strength member (300) on a side of the main optical fiber (200) is arranged as an auxiliary optical fiber. In this way, the auxiliary optical fiber that serves as the strength member (300) can improve a tensile capacity of the entire optical cable, to protect the main optical fiber (200) from being damaged under an external force. In addition, the auxiliary optical fiber may also be configured to transmit an optical signal. After the main optical fiber (200) is damaged, without replacing the whole optical cable, the auxiliary optical fiber is directly fusion spliced, and the auxiliary optical fiber is used for signal transmission. This ensures normal use of the optical cable, facilitates maintenance of the optical cable, and reduces maintenance costs.

## Description

This application claims priority to Chinese Patent Application No. 202110665310.5, filed with the China National Intellectual Property Administration on June 16, 2021 and entitled "OPTICAL CABLE", which is incorporated herein by reference in its entirety.

### TECHNICAL FIELD

Embodiments of this application relate to the field of drop cable technologies, and in particular, to an optical cable.

### BACKGROUND

In recent years, some high-end users have put forward higher requirements for home networking, and demands for all-optical home networks are increasingly strong. Fiber to the room (Fiber to the Room, FTTR for short) becomes a new market opportunity. In an FTTR solution, an optical network unit (Optical Network Unit, ONU for short) is connected to a main optical network terminal (Optical Network Terminal, ONT for short) of a home user, to implement fiber to the room. The main ONT is connected by an optical cable to an information box (which is a miniaturized optical line terminal (optical line terminal, OLT for short)) in each room, to ensure that each room has a stable network point, thereby forming a complete all-optical home networking scenario.

In a conventional technology, an optical cable laid to each room includes a central optical fiber, a strength member, and a protective sheath. The central optical fiber and the strength member are located in the protective sheath, so that the central optical fiber and the strength member are hidden and protected by the protective sheath. This avoids exposure of the central optical fiber and the strength member to an external environment, and prolongs service lives of the central optical fiber and the strength member. The strength member is configured to improve tensile strength of the optical cable, to prevent the central optical fiber from being damaged under an external force.

However, when a central optical fiber in a conventional optical cable is damaged and fails, the entire optical cable needs to be replaced. This consumes time and labor, and increases maintenance costs.

### SUMMARY

Embodiments of this application provide an optical cable, to resolve a problem that after a single-core optical fiber in a conventional optical cable is damaged, the entire optical cable needs to be replaced, which results in time-consuming, labor-consuming, and costly maintenance.

An embodiment of this application provides an optical cable, including an outer sheath, a main optical fiber, and at least two strength members.

The main optical fiber and the strength members are all located inside the outer sheath, and the main optical fiber and the strength members have a same extension direction.

At least two strength members are spaced apart on an outer periphery of the main optical fiber, and at least one of the strength members is an auxiliary optical fiber.

According to the optical cable provided in embodiments of this application, at least one strength member on a side of the main optical fiber is arranged as an auxiliary optical fiber. In this way, the auxiliary optical fiber that serves as the strength member can improve a tensile capacity of the entire optical cable, to protect the main optical fiber from being damaged under an external force. In addition, the auxiliary optical fiber may also be configured to transmit an optical signal. After the main optical fiber is damaged, without replacing the entire optical cable, fusion splicing and the like may be directly performed on the auxiliary optical fiber. The auxiliary optical fiber is used for signal transmission. This not only ensures normal use of the optical cable, but also facilitates the maintenance of the optical cable, and reduces maintenance costs.

In an optional implementation, at least two strength members are respectively arranged on either of two sides of the main optical fiber along a first radial direction, and each strength member is an auxiliary optical fiber.

According to an embodiment of this application, at least two strength members are respectively arranged on either of two sides of the main optical fiber along the first radial direction, to further improve a tensile capacity of the optical cable. In addition, each strength member is arranged as an auxiliary optical fiber, so that after the main optical fiber is damaged, any auxiliary optical fiber may be used for optical signal transmission, which facilitates the maintenance of the optical cable. In addition, two auxiliary optical fibers located on a same side of the main optical fiber may serve together as a dual-core optical fiber, and are respectively configured to send and receive optical signals, to improve signal transmission reliability of the optical cable.

In an optional implementation, a plurality of strength members located on a same side of the main optical fiber are arranged along a first direction.

There is an angle between the first direction and the first radial direction.

Because the main optical fiber and the strength members located on two sides of the main optical fiber occupy specific space in the first radial direction, the plurality of strength members located on the same side of the main optical fiber are arranged along the first direction that is at a specific angle to the first radial direction, to save space occupied by the plurality of strength members located on the same side of the main optical fiber in the first radial direction. In this way, a structure of the optical cable according to this embodiment of this application is more compact, and further, space occupied by laying the optical cable is saved, so that the cable is better adapted to use in an indoor communication scenario, and is also more convenient to install.

In an optional implementation, the first direction and the first radial direction are perpendicular to each other, to further save the space occupied by the strength members in the optical cable along the first radial direction. This reduces a size of the optical cable in the first radial direction, and further improves structural compactness of the optical cable.

In an optional implementation, the optical cable further includes a tight sleeve, and the tight sleeve is sleeved on an outer surface of the main optical fiber.

The outer sheath and the tight sleeve are both made of transparent materials, and manufacturing materials of the outer sheath and the tight sleeve both include any one or more of polyvinyl chloride, nylon, and thermoplastic polyurethane elastomer rubber.

According to an embodiment of this application, the tight sleeve is sleeved on the main optical fiber, to improve rigidity of the main optical fiber, and ensure that the main optical fiber is not bent and damaged during transportation and installation. In addition, the outer sheath and the tight sleeve are both made of transparent materials, to improve transparency of the entire optical cable, so that the optical cable in this embodiment of this application can be better adapted to different home decoration styles. In addition, the outer sheath and the tight sleeve are made of the foregoing fire-retardant materials, to ensure fire safety performance of the outer sheath indoors while implementing a transparent hiding effect.

In an optional implementation, the optical cable further includes an adhesive layer and an anti-adhesive layer.

The adhesive layer is arranged on at least a part of a surface of the outer sheath, and the anti-adhesive layer is adhered to a surface of the adhesive layer.

According to an embodiment of this application, the adhesive layer is arranged on at least a part of the surface of the outer sheath, and the anti-adhesive layer is arranged on the surface of the adhesive layer. In this way, when the optical cable is laid, the optical cable may be quickly stably adhered to a wall directly through the adhesive layer after the anti-adhesive layer is torn off, thereby improving the efficiency of laying the optical cable in this embodiment of this application.

In an optional implementation, at least a part of an outer surface of the outer sheath is configured as a plane, and the adhesive layer is arranged on the plane.

According to an embodiment of this application, at least a part of the outer surface of the outer sheath is arranged as a plane, to help fasten the adhesive layer stably to the surface of the outer sheath, and also enable the outer sheath to be stably fastened to a wall through the horizontal adhesive layer.

In an optional implementation, the adhesive layer is a transparent double-sided tape, and the transparent double-sided tape and the outer sheath are integrally formed as an integral part. This improves the manufacturing efficiency of the optical cable, and makes it easier to fasten and stick the optical cable, improving the efficiency of laying the optical cable. In addition, the transparent double-sided tape further improves the transparency of the optical cable, so that the optical cable is better adapted to various home decoration styles.

In an optional implementation, a first groove and a second groove are formed on the outer sheath. The first groove and the second groove are provided from one end of the outer sheath to the other end along the extension direction.

The first groove is arranged in a second radial direction of the main optical fiber, and the second groove is arranged in the first radial direction of the main optical fiber.

The first radial direction and the second radial direction are perpendicular to each other.

According to an embodiment of this application, the first groove is arranged on the outer sheath, and the first groove is arranged in the second radial direction of the main optical fiber. In this way, when the main optical fiber needs to be connected, the outer sheath may be torn off at the groove on the outer sheath, to quickly expose the main optical fiber, and further connect the main optical fiber to an information box and the like. In addition, the optical cable may also be quickly divided into a left part and a right part. In this way, an end portion of any auxiliary optical fiber on two sides of the main optical fiber is exposed, and is fusion spliced or connected to an FMC connector. This further improves the maintenance efficiency of the optical cable. In addition, the second groove is arranged at a position on the outer sheath along the first radial direction of the main optical fiber. In this way, after the main optical fiber inside the outer sheath is damaged, the outer sheath may be quickly torn off from the second groove, to quickly expose the auxiliary optical fiber, and perform fusion splicing and the like on the auxiliary optical fiber. This further improves the maintenance efficiency of the optical cable.

In an optional implementation, a width of the outer sheath in the first radial direction of the main optical fiber ranges from 1.5 mm to 2.0 mm. A height of the outer sheath in the second radial direction of the main optical fiber ranges from 1.2 mm to 1.9 mm. The first radial direction and the second radial direction are perpendicular to each other.

By setting the width of the outer sheath in the first radial direction and the width of the outer sheath in the second radial direction within the foregoing ranges, a size occupied by laying the optical cable is reduced, to better adapt the optical cable to use in an indoor communication scenario. For example, the optical cable may enter each room through a door gap, which facilitates indoor cross-room installation, thereby reducing deployment time and costs of the optical cable.

### BRIEF DESCRIPTION OF DRAWINGS

FIG. 1 is a schematic diagram of a structure of an optical cable according to an embodiment of this application;
FIG. 2 is a radial cross-sectional view of FIG. 1;
FIG. 3 is a schematic diagram of another structure of an optical cable according to an embodiment of this application;
FIG. 4 is a radial cross-sectional view of FIG. 3;
FIG. 5 is a schematic diagram of still another structure of an optical cable according to an embodiment of this application;
FIG. 6 is a schematic diagram of yet another structure of an optical cable according to an embodiment of this application; and
FIG. 7 is a radial cross-sectional view of FIG. 6.

### Reference numerals:

100: outer sheath;
110: first groove;
120: second groove;
200: main optical fiber;
300: strength member;
400: tight sleeve;
500: adhesive layer; and
600: anti-adhesive layer.

### DESCRIPTION OF EMBODIMENTS

The terms used in embodiments of this application are only used to explain specific embodiments of this application, but are not intended to limit this application.

Currently, an optical cable laid between a main optical modem, that is, an ONT, in a home and an information box, that is, an OLT, in each room is configured to transmit an optical signal between the main optical modem and the information box, so that an optical network unit located upstream of the main optical modem is going deep to the home. This ensures that each room has a stable network point, to implement a fiber to the room (FTTR) solution.

Generally, a central optical fiber and a strength member are arranged inside an optical cable connecting a main optical modem to an information box in each room, and the strength member is located on an outer periphery of the central optical fiber. In addition, the optical cable further includes an outer sheath, and the outer sheath wraps the central optical fiber and the strength member, to isolate the central optical fiber and the strength member from an external environment. The central optical fiber is configured to transmit an optical signal, and the strength member is configured to improve tensile strength of the entire optical cable, to protect the central optical fiber from being damaged under an external force.

In a conventional technology, the strength member is mainly made of one or more of a copper-plated steel wire, a phosphated steel wire, a galvanized steel wire, Kevlar fiber reinforced plastic (Kevlar Fiber Reinforced Plastic, KFRP for short), and fiber reinforced polymer (Fiber Reinforced Polymer, FRP for short), to ensure that the screen tension of the strength member is at least 150 kpsi, thereby improving the tensile capacity of the optical cable.

In actual application, the central optical fiber is inevitably damaged due to an external force and the like, and fails to transmit an optical signal. To ensure normal operation of an entire network, a damaged optical cable between the main optical modem and the information box in the room needs to be replaced entirely. This not only consumes time and labor, but also increases maintenance costs of the optical cable.

Specifically, costs of an entire optical cable are high. In addition, a new optical cable needs to be reinstalled on the wall, and both ends of a central optical fiber of the new optical cable need to be connected to the information box and the main optical modem again. The entire process consumes time and labor, which greatly reduces the maintenance efficiency of the optical cable.

Based on this, an embodiment of this application provides an optical cable. Some or all of strength members are arranged as optical fibers. In this way, an optical fiber that serves as a strength member can improve the tensile capacity of the entire optical cable, to protect the central optical fiber, that is, a main optical fiber, from being damaged under an external force. In addition, the optical fiber that serves as the strength member may be used as an auxiliary optical fiber and configured to transmit an optical signal. After the central main optical fiber is damaged, without replacing the entire optical cable, fusion splicing and the like are directly performed on the auxiliary optical fiber. In other words, the auxiliary optical fiber is used for signal transmission. This ensures normal use of the optical cable, facilitates maintenance of the optical cable, and reduces maintenance costs.

A specific structure of the optical cable according to an embodiment of this application is described below in detail.

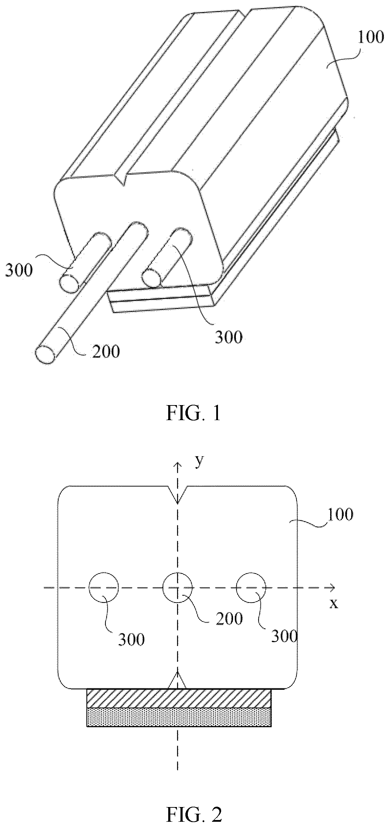

FIG. 1 is a schematic diagram of a structure of an optical cable according to an embodiment of this application. FIG. 2 is a radial cross-sectional view of FIG. 1. Referring to FIG. 1 and FIG. 2, an embodiment of this application provides an optical cable, including an outer sheath 100, a main optical fiber 200, and at least two strength members 300. The main optical fiber 200 and the strength members 300 are all located inside the outer sheath 100, and the main optical fiber 200 and the strength members 300 have a same extension direction.

In this embodiment of this application, the main optical fiber 200 serves as a main element of the optical cable and is configured to transmit an optical signal. For example, after the optical cable is connected to a main optical modem in a home and an information box in each room, the main optical fiber 200 in the optical cable implements signal transmission between the main optical modem and the information box. The screen tension of the main optical fiber 200 may be 100 kpsi or even less than 100 kpsi. The screen tension of the main optical fiber 200 is not specifically limited in this embodiment of this application.

During specific configuration, the main optical fiber 200 may be a single-core optical fiber, or may be a multi-core optical fiber. The following specifically describes the structure of the optical cable by using a single-core optical fiber as an example. In addition, the main optical fiber 200 may be a single-mode optical fiber. For example, the main optical fiber 200 may be a single-mode optical fiber of any one of the models G.652D, G.657A2, and B3. The main optical fiber 200 may alternatively be a multi-mode optical fiber. For example, the main optical fiber 200 may be a multi-mode optical fiber of any one of the models OM2, OM3, and OM4.

In actual application, the main optical fiber 200 and the strength members 300 are wrapped inside the outer sheath 100, to isolate main components of the optical cable, the main optical fiber 200 and the strength member 300 from an external environment. This protects the main optical fiber 200 and avoids damage caused by collision between the main optical fiber 200 and the external environment during transportation or installation.

Generally, before the optical cable is used, the outer sheath 100 wraps the main optical fiber 200 and the strength members 300 in the entire extension direction. In other words, the outer sheath 100 completely wraps the main optical fiber 200 and the strength members 300. When the optical cable is installed, a part of the outer sheath 100 on an outer periphery of an end portion of the main optical fiber 200 is torn off, to expose the end portion of the main optical fiber 200. The main optical fiber 200 is fusion spliced or connected to an FMC connector, and further connected to the information box, the main optical modem, and the like.

In an actual manufacturing process, connectors may be directly prefabricated at two ends of the main optical fiber 200 in the optical cable. In this way, when the optical cable is installed, parts of the outer sheath 100 on outer peripheries of end portions of the main optical fiber 200 are torn off, to expose the prefabricated connectors at the end portions of the main optical fiber 200, and finally the prefabricated connectors are connected to the information box and the like.

Referring to FIG. 2, in this embodiment of this application, at least two strength members 300 are spaced apart on an outer periphery of the main optical fiber 200. The strength members 300 are arranged on the outer periphery of the main optical fiber 200, to improve the tensile capacity of the entire optical cable and prevent the main optical fiber 200 from being damaged under an external force.

For example, as shown in FIG. 2, two strength members 300 may be spaced apart on the outer periphery of the main optical fiber 200, and the two strength members 300 may be respectively arranged on two sides of the main optical fiber 200 along a first radial direction (refer to a direction x shown in FIG. 2), to ensure that the two strength members 300 both protect a structure of the main optical fiber 200.

It should be noted that the first radial direction, that is, the direction x, is an extension direction of a first diameter of the main optical fiber 200. The first diameter may be a diameter in any direction of the main optical fiber 200. This embodiment of this application is described in detail by using an example in which a horizontal direction is used as the first radial direction, that is, the direction x. It should be emphasized herein that in this embodiment of this application, an example in which the main optical fiber 200 is a single-core optical fiber is used for structure description, and the radial direction of the main optical fiber 200 refers to a radial direction of the single-core optical fiber. When the main optical fiber 200 is a multi-core optical fiber, the radial direction of the main optical fiber 200 refers to a radial direction of a cylindrical structure jointly formed by the multi-core optical fiber.

In this case, it may be understood that a connecting line between the two strength members 300 that are respectively located on the two sides of the main optical fiber 200 along the first radial direction, that is, the direction x, passes through a central axis of the main optical fiber 200. In other words, the two strength members 300 are centrosymmetric with respect to the main optical fiber 200.

Certainly, in another example, the two strength members 300 may also be respectively arranged on two sides of the main optical fiber 200 along another direction parallel to the first radial direction, that is, the direction x. That is to say, the connecting line between the two strength members 300 does not pass through the central axis of the main optical fiber 200. In other words, the two strength members 300 are merely axisymmetric with respect to the central axis of the main optical fiber 200, but not centrosymmetric with respect to the main optical fiber 200. An arrangement of the strength members 300 is not limited in this embodiment of this application.

In the foregoing example, the main optical fiber 200 may be arranged at a central position of the outer sheath 100. The two strength members 300 are respectively arranged on the outer periphery of the main optical fiber 200, and distances between the strength members 300 and the central axis of the main optical fiber 200 may be all equal.

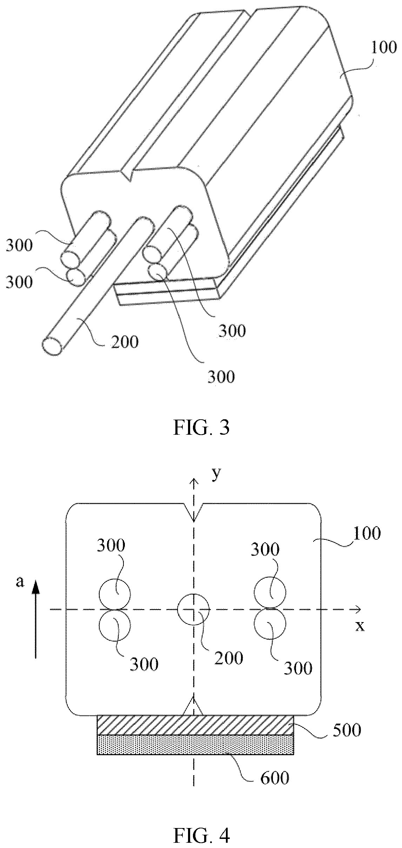

FIG. 3 is a schematic diagram of a structure of an optical cable according to an embodiment of this application. FIG. 4 is a radial cross-sectional view of FIG. 3. Referring to FIG. 3 and FIG. 4, during specific configuration, there may be two or more strength members 300. For example, the main optical fiber 200 is arranged at a central position of the outer sheath 100. Three strength members 300 are evenly distributed around a central axis of the main optical fiber 200 and on an outer periphery of the main optical fiber 200.

For another example, at least four strength members 300 may be arranged on the outer periphery of the main optical fiber 200. The four strength members 300 may be evenly distributed on the outer periphery of the main optical fiber 200. Certainly, in some examples, at least two strength members 300 may be respectively arranged on two sides of the main optical fiber 200 along a first radial direction, that is, a direction x. In other words, at least two strength members 300 are arranged on either side of the main optical fiber 200 along the first radial direction, that is, the direction x, to further improve the tensile capacity of the optical cable in this embodiment of this application. For example, two or more strength members 300 are arranged on either of two sides of the main optical fiber 200 along the first radial direction.

Referring to FIG. 4, a plurality of strength members 300 located on a same side of the main optical fiber 200 are arranged along a first direction (refer to a direction a shown in FIG. 4). The first direction may be any direction at a specific angle to the first radial direction, that is, the direction x. For example, two strength members 300 are arranged on either of two sides of the main optical fiber 200 along the first radial direction, that is, the direction x. Two strength members 300 on a same side are arranged along the first direction, that is, the direction a. There is a specific angle between the first direction a and the first radial direction, that is, the direction x. For example, the angle between the first direction, that is, the direction a, and the first radial direction, that is, the direction x, may have a proper angle value such as 30°, 45°, or 60°.

Still referring to FIG. 4, because the main optical fiber 200 and the strength members 300 located on two sides of the main optical fiber 200 occupy specific space in the first radial direction, that is, the direction x, the plurality of strength members 300 located on the same side of the main optical fiber 200 are arranged along the first direction, that is, the direction a, at a specific angle to the first radial direction, that is, the direction x, to save space occupied by the plurality of strength members 300 located on the same side of the main optical fiber 200 in the first radial direction, that is, the direction x. In this way, the structure of the optical cable in this embodiment of this application is more compact, and space occupied by laying the optical cable is saved. The optical cable is better adapted to use in an indoor communication scenario, and is more convenient to install.

During specific configuration, an arrangement direction of the two strength members 300 on the same side of the main optical fiber 200 may be perpendicular to the first radial direction, that is, the direction x. In other words, the two strength members 300 on the same side of the main optical fiber 200 may be arranged along the first direction, that is, the direction a, that is perpendicular to the first radial direction, that is, the direction x. This further saves space occupied by the strength members 300 in the optical cable along the first radial direction, that is, the direction x, reduces a size of the optical cable in the first radial direction, that is, the direction x, and further improves the structural compactness of the optical cable.

For example, as shown in FIG. 4, the two strength members 300 on the same side of the main optical fiber 200 are arranged along a direction parallel to a second radial direction (a direction y shown in FIG. 4) of the main optical fiber 200. For example, the two strength members 300 on the same side are respectively located on an upper side and a lower side of an axial cross-section of the main optical fiber 200 along the first radial direction.

It should be noted that the second radial direction, that is, the direction y, is an extension direction of a second diameter of the main optical fiber 200, and the second diameter may be a diameter of the main optical fiber 200 in a direction perpendicular to the first radial direction. This embodiment of this application is described in detail by using an example in which a vertical direction is used as the second radial direction, that is, the direction y.

It should be noted that, to reduce the size of the optical cable in the first direction, that is, the direction a, the plurality of strength members 300 on the same side of the main optical fiber 200 may be arranged in contact. In other words, the plurality of strength members 300 arranged along the first direction, that is, the direction a, are arranged in contact with each other. Through such a setting, an arrangement size of the strength members 300 in the first direction of the optical fiber, that is, the direction a, is reduced, to further reduce a specified size of the optical cable in the first direction, that is, the direction a. In addition, the strength members 300 in contact with each other may also support each other, to enhance the structural strength of each strength member 300. Referring to FIG. 4, for example, the plurality of strength members 300 on the same side of the main optical fiber 200 are sequentially stacked along a direction parallel to the direction y. This effectively reduces an occupied size of the plurality of strength members 300 arranged on the same side in the direction perpendicular to the first radial direction, that is, the direction x.

Referring to FIG. 4, during specific configuration, in this embodiment of this application, a width of the outer sheath 100 in the first radial direction of the main optical fiber 200, that is, the direction x, may be set to range from 1.5 mm to 2.0 mm. For example, the width of the outer sheath 100 in the first radial direction of the main optical fiber 200, that is, the direction x, may have a proper value such as 1.5 mm, 1.6 mm, 1.7 mm, 1.8 mm, 1.9 mm, or 2.0 mm. In this embodiment of this application, the width of the outer sheath 100 in the first radial direction of the main optical fiber 200, that is, the direction x, is not limited, and may be specifically adjusted based on an actual requirement.

In addition, a height of the outer sheath 100 in the second radial direction of the main optical fiber 200, that is, the direction y, ranges from 1.2 mm to 1.9 mm. For example, the height of the outer sheath 100 in the second radial direction of the main optical fiber 200, that is, the direction y, may have a proper value such as 1.2 mm, 1.4 mm, 1.6 mm, 1.8 mm, or 1.9 mm. In this embodiment of this application, the height of the outer sheath 100 in the second radial direction of the main optical fiber 200, that is, the direction y, is not limited, and may be specifically adjusted based on an actual requirement.

The second radial direction, that is, the direction y, is perpendicular to the first radial direction, that is, the direction x. For example, when a shape of a radial cross-section of the outer sheath 100 is a square or rectangular structure, the first radial direction, that is, the direction x, may be a width direction of the radial cross-section of the outer sheath 100, and the second radial direction, that is, the direction y, may be a height direction of the radial cross-section of the outer sheath 100. In this way, the width of the outer sheath 100 may be set within a value range of 1.5 mm to 2.0 mm, and the height of the outer sheath 100 may be set within a value range of 1.2 mm to 1.9 mm, which may be specifically adjusted based on actual requirements.

It should be noted herein that the values and the value ranges included in embodiments of this application are approximate values, and there may be an error within a specific range due to impact of the manufacturing process. The error may be considered negligible by a person skilled in the art.

By setting the width of the outer sheath 100 in the first radial direction, that is, the direction x, and the width of the outer sheath in the second radial direction, that is, the direction y, within the foregoing ranges, a size occupied by laying the optical cable is reduced, to better adapt the optical cable to use in an indoor communication scenario. For example, the optical cable may enter each room through a door gap, which facilitates indoor cross-room installation, thereby reducing deployment time and costs of the optical cable.

At least one strength member 300 in this embodiment of this application is an auxiliary optical fiber. For example, referring to FIG. 2, when one strength member 300 is arranged on either of the two sides of the main optical fiber 200 along the first radial direction, that is, the direction x, one of the two strength members 300 located on the two sides of the main optical fiber 200 is an auxiliary optical fiber. For example, a strength member 300 on a left side of the main optical fiber 200 is arranged as an auxiliary optical fiber. Certainly, the two strength members 300 respectively arranged on the two sides of the main optical fiber 200 along the first radial direction, that is, the direction x, may both be auxiliary optical fibers.

It should be noted that, in this embodiment of this application, the main optical fiber 200 means an optical fiber that plays a primary role. In other words, the optical cable generally transmits an optical signal through the main optical fiber 200. The auxiliary optical fiber is a name distinguished from the main optical fiber 200, and the auxiliary optical fiber specifically means an optical fiber that plays a role of assisting the main optical fiber 200. In other words, at least one strength member 300 is an optical fiber, and the optical fiber is used as an auxiliary optical fiber of the main optical fiber 200, and may also be configured to transmit an optical signal. For example, after the main optical fiber 200 is damaged due to an external force or the like, the auxiliary optical fiber may be used for signal transmission between the main optical modem and the information box.

The auxiliary optical fiber may be a single-core optical fiber or a multi-core optical fiber. In addition, the auxiliary optical fiber may be a single-mode optical fiber. For example, the auxiliary optical fiber may be a single-mode optical fiber of any one of the models G.652D, G.657A2, and B3. The auxiliary optical fiber may alternatively be a multi-mode optical fiber. For example, the auxiliary optical fiber may be a multi-mode optical fiber of any one of the models OM2, OM3, and OM4.

When some strength members 300 are arranged as auxiliary optical fibers, the remaining, non-auxiliary-optical-fiber strength member 300 may be made of one or more of a copper-plated steel wire, a phosphated steel wire, a galvanized steel wire, Kevlar fiber reinforced plastic (Kevlar Fiber Reinforced Plastic, KFRP for short), and fiber reinforced polymer (Fiber Reinforced Polymer, FRP for short), to ensure that the screen tension of the strength member 300 is at least 150 kpsi, thereby improving the tensile capacity of the optical cable.

In an optional implementation, the remaining, non-auxiliary-optical-fiber strength members 300 may be made of an FRP material. In this way, the non-auxiliary-optical-fiber strength members 300 are made of a transparent material. In addition, because the optical fiber is also made of a transparent material, materials of the main optical fiber 200, the auxiliary optical fiber, and the non-auxiliary-optical-fiber strength members 300 are all transparent. This improves an invisible effect of the optical cable according to this embodiment of this application, to enable the optical cable to be adapted to home decoration styles of different colors.

In addition, for the auxiliary optical fiber that serves as the strength member 300, an optical fiber with screen tension greater than 150 kpsi may be used as the auxiliary optical fiber, to further improve the tensile capacity of the optical cable.

It may be understood that, when some strength members 300 are arranged as auxiliary optical fibers, the remaining, non-auxiliary-optical-fiber strength members 300 also improve the tensile capacity of the optical cable. In this way, the main optical fiber 200 and the auxiliary optical fibers all can be protected, to ensure that the main optical fiber 200 and the auxiliary optical fibers are not damaged, and prolong a service life of the optical cable.

One of installation processes of the optical cable according to this embodiment of this application is provided as follows.

First, a section of the optical cable according to this embodiment of this application is prepared. Then, the optical cable is laid on a wall between a main optical modem and an information box in a room. The outer sheath 100 at two ends of the optical cable is torn off, and two ends of the main optical fiber 200 are exposed. Then, end portions of the main optical fiber 200 are respectively fusion spliced with an optical fiber on the main optical modem and an optical fiber on the information box. In this way, as a primary transmission medium for optical signals, the main optical fiber 200 is connected between the main optical modem and the information box, to transmit a signal between the main optical modem and the information box.

After the main optical fiber 200 is damaged, two ends of any auxiliary optical fiber are exposed by tearing off the outer sheath 100, and then end portions of the auxiliary optical fiber are fusion spliced with the optical fiber on the main optical modem and the optical fiber on the information box respectively. In this way, as a transmission medium for optical signals, the auxiliary optical fiber is connected between the main optical modem and the information box, to transmit a signal between the main optical modem and the information box.

According to the optical cable provided in this embodiment of this application, at least one strength member 300 on a side of the main optical fiber 200 is arranged as an auxiliary optical fiber. In this way, the auxiliary optical fiber that serves as the strength member 300 can improve the tensile capacity of the entire optical cable, to protect the main optical fiber 200 from being damaged under an external force. In addition, the auxiliary optical fiber may also be configured to transmit an optical signal. After the main optical fiber 200 is damaged, without replacing the entire optical cable, fusion splicing and the like are directly performed on the auxiliary optical fiber. The auxiliary optical fiber is used for signal transmission. This not only ensures normal use of the optical cable, but also facilitates maintenance of the optical cable, and reduces maintenance costs.

During specific configuration, each strength member 300 may be an auxiliary optical fiber. For example, referring to FIG. 4, two strength members 300 are respectively arranged on either of two sides of the main optical fiber 200 along the first radial direction, that is, the direction x, and the four strength members 300 may all be auxiliary optical fibers. In this way, after the main optical fiber 200 is damaged, any one of the auxiliary optical fibers may be used to transmit an optical signal, to facilitate the maintenance of the optical cable. In addition, the two auxiliary optical fibers located on a same side of the main optical fiber 200 may serve together as a dual-core optical fiber, and are respectively configured to send and receive optical signals, to improve signal transmission reliability of the optical cable.

In the optical cable according to this embodiment of this application, the main optical fiber 200 may be a bare optical fiber, to simplify the structure of the optical cable, and improve the manufacturing efficiency of the optical cable. In addition, the optical fiber is a transparent structure, which may further improve the transparency of the optical cable, to improve the sense of beauty for the installation of the optical cable.

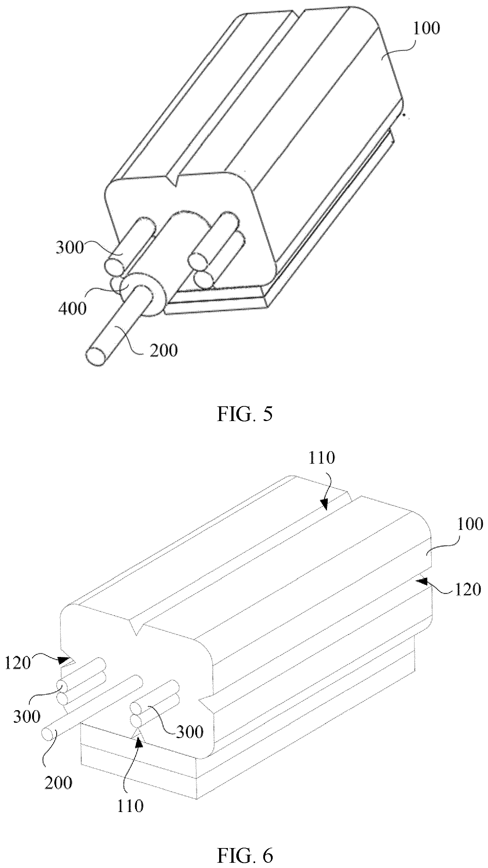

FIG. 5 is a schematic diagram of still another structure of an optical cable according to an embodiment of this application. Referring to FIG. 5, in some examples, the optical cable may further include a tight sleeve 400, and the tight sleeve 400 is sleeved on an outer surface of the main optical fiber 200. For example, when the main optical fiber 200 is a single-core optical fiber, the tight sleeve 400 is sleeved on an outer surface of the single-core optical fiber, to protect the single-core optical fiber.

It may be understood that the tight sleeve 400 is sleeved on the entire outer surface of the main optical fiber 200 along an extension direction, to completely wrap the main optical fiber 200, to improve rigidity of the main optical fiber 200, thereby ensuring that the main optical fiber 200 is not bent or damaged during transportation and installation.

During specific configuration, materials of the outer sheath 100 and the tight sleeve 400 may be both set to be transparent materials, to improve the transparency of the entire optical cable, so that the optical cable according to this embodiment of this application can be better adapted to different home decoration styles. In addition, with reference to the strength member 300 made of an FRP material or an optical fiber, the transparency and invisibility effect of the entire optical cable are maximized. This further improves the wide adaptability of the optical cable according to this embodiment of this application.

A manufacturing material of at least one of the outer sheath 100 and the tight sleeve 400 may include, but is not limited to, any one or more of polyvinyl chloride (polyvinyl chloride, PVC for short), nylon, and thermoplastic polyurethanes (thermoplastic polyurethanes, TPU for short). For example, manufacturing materials of the outer sheath 100 and the tight sleeve 400 may both include polyvinyl chloride (polyvinyl chloride, PVC for short), nylon, or thermoplastic polyurethanes (thermoplastic polyurethanes, TPU for short).

It should be noted that the foregoing manufacturing materials of the outer sheath 100 and the tight sleeve 400 are all fire-retardant materials. The outer sheath 100 and the tight sleeve 400 are made of the fire-retardant materials, to ensure fire safety performance of the outer sheath 100 indoors while implementing a transparent hiding effect.

When the optical cable according to this embodiment of this application is laid, the optical cable may be directly adhered to a wall between the main optical modem and the information box through an adhesive tape, or may also be clamped on the wall through a cable fastening clip.

Referring to FIG. 4, to further improve the efficiency of laying the optical cable, the optical cable according to this embodiment of this application further includes an adhesive layer 500 and an anti-adhesive layer 600. The adhesive layer 500 is arranged on at least a part of a surface of the outer sheath 100, and the anti-adhesive layer 600 is adhered to a surface of the adhesive layer 500.

It may be understood that the adhesive layer 500 is arranged on a surface of the outer sheath 100 facing the wall, so that the outer sheath 100 is stably fastened to the wall through the adhesive layer 500.

During specific configuration, the adhesive layer 500 may extend from one end of the outer sheath 100 to the other end along the extension direction. In other words, an extension length of the adhesive layer 500 is consistent with an extension length of the outer sheath 100. In this way, it can be ensured that any point of the outer sheath 100 is adhered to the wall along the extension direction, to improve stability of the optical cable.

Certainly, in another example, the extension length of the adhesive layer 500 may be shorter than the extension length of the outer sheath 100. In other words, the adhesive layer 500 is arranged on a part of the surface of the outer sheath 100 along the extension direction. For example, a plurality of adhesive layers 500 may be spaced apart on the outer sheath 100 along the extension direction. In this way, the outer sheath 100 is adhered to a wall at intervals along the extension direction, to not only ensure that the outer sheath 100 is stably fastened to the wall, but also save the manufacturing materials of the optical cable according to this embodiment of this application, thereby reducing manufacturing costs of the optical cable.

In addition, the anti-adhesive layer 600 is adhered to a surface of the adhesive layer 500 before the optical cable is installed, to prevent the adhesive surface of the adhesive layer 500 from being polluted by the external environment and being less adhesive.

During specific installation of the optical cable according to this embodiment of this application, the anti-adhesive layer 600 on the surface of the adhesive layer 500 is first torn off, and then the outer sheath 100 of the optical cable is stably adhered to a planned wall through the adhesive layer 500.

In this embodiment of this application, the adhesive layer 500 is arranged on at least the part of the surface of the outer sheath 100, and the anti-adhesive layer 600 is arranged on a surface of the adhesive layer 500. In this way, when the optical cable is laid, the optical cable may be quickly stably adhered to a wall directly through the adhesive layer 500 after the anti-adhesive layer 600 is torn off, thereby improving the efficiency of laying the optical cable according to this embodiment of this application while improving the reliability of laying the optical cable according to this embodiment of this application.

During specific configuration, the adhesive layer 500 according to this embodiment of this application and the outer sheath 100 may be integrally formed as an integral part. For example, the outer sheath 100 and the adhesive layer 500 may be integrally formed through two-color injection molding, so that the optical cable is manufactured more conveniently and quickly.

Still referring to FIG. 4, to improve the adhesion reliability of the optical cable, at least a part of an outer surface of the outer sheath 100 may be configured as a plane. The adhesive layer 500 is arranged on the plane. For example, one of surfaces of the outer sheath 100 may be arranged as a planar structure, and the adhesive layer 500 is arranged on the plane, so that the adhesive layer 500 is stably fastened to the surface of the outer sheath 100, and the outer sheath 100 can be stably fastened to the wall through the horizontal adhesive layer 500.

For example, one of two opposite surfaces, for example, a lower surface, of the outer sheath 100 along the second radial direction of the main optical fiber 200, that is, the direction y, is arranged as a planar structure. The adhesive layer 500 is arranged on the lower surface of the outer sheath 100, and the anti-adhesive layer 600 is adhered to an adhesive surface of the adhesive layer 500. When the optical cable is fastened, the anti-adhesive layer 600 may be directly torn off, and then, the lower surface of the outer sheath 100 is adhered to the wall, so that the optical cable can be efficiently and stably laid.

During specific implementation, the adhesive layer 500 may be an adhesive laid on the surface of the outer sheath 100. A manufacturing material of the adhesive may include, but is not limited to, any one or more of thermosetting resins such as epoxy resin, phenolic resin, ureaformaldehyde resin, and polyurethane, thermoplastic resins such as polyvinyl acetal and perchlorethylene resin, and synthetic rubber such as neoprene and nitrile rubber. For example, the adhesive used as the adhesive layer 500 may be made of materials such as epoxy resin, polyvinyl acetal, and neoprene.

In some examples, the adhesive layer 500 may be further arranged as a transparent double-sided tape. The transparent double-sided tape and the outer sheath 100 are integrally formed as an integral part. For example, the outer sheath 100 and the transparent double-sided tape are integrally formed through the two-color injection molding, to improve the manufacturing efficiency of the optical cable.

In addition, the adhesive layer 500 is arranged as a double-sided tape, to make it more convenient to form the adhesive layer 500 on the outer sheath 100 and also make it easier to fasten and stick the optical cable. For example, when the optical cable is laid, the optical cable that is integrally formed may be directly adhered to a wall. There is no need to first adhere the double-sided tape to the outer sheath 100 before the optical cable is fastened to the wall and then adhere the outer sheath 100 to the wall through the double-sided tape. Therefore, the efficiency of laying the optical cable is improved.

In addition, the adhesive layer 500 is arranged as a transparent double-sided tape, to further improve the transparency of the optical cable, so that the optical cable can be better adapted to various home decoration styles.

It should be noted that the anti-adhesive layer 600 on the outer surface of the adhesive layer 500 may be made of a non-transparent material.

Based on the foregoing content, it can be learned that, when the optical cable is installed, a part of the outer sheath 100 on an outer periphery of an end portion of the main optical fiber 200 needs to be torn off, to expose the end portion of the main optical fiber 200. The main optical fiber 200 is fusion spliced or connected to an FMC connector, and further connected to an information box, a main optical modem, and the like. In this way, the main optical fiber 200 can implement optical signal transmission between the information box and the main optical modem.

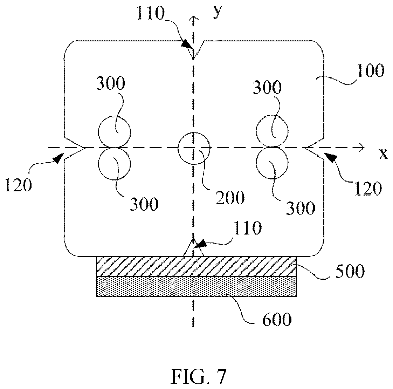

FIG. 6 is a schematic diagram of yet another structure of an optical cable according to an embodiment of this application. FIG. 7 is a radial cross-sectional view of FIG. 6. Referring to FIG. 6 and FIG. 7, to facilitate tearing off the outer sheath 100, in this embodiment of this application, a first groove 110 may be formed on the outer sheath 100. The first groove 110 is arranged in a second radial direction of the main optical fiber 200, that is, the direction y, and the first groove 110 is arranged from one end of the outer sheath 100 to the other end of the outer sheath 100 along an extension direction. In other words, the first groove 110 is arranged in the entire extension direction of the outer sheath 100.

It may be understood that, because the first groove 110 has a specific width, a part of the first groove 110 is usually located in the second radial direction, of the main optical fiber 200, that is, the direction y. In other words, the part of the first groove 110 is located in a plane on which an axial cross-section of the main optical fiber 200 along the second radial direction, that is, the direction y, is located.

Referring to FIG. 7, the first groove 110 is arranged in the second radial direction of the main optical fiber 200, that is, the direction y. When the optical cable is installed, the outer sheath 100 may be torn off at the first groove 110 to quickly expose an end portion of the main optical fiber 200, and the main optical fiber 200 is further fusion spliced with the information box and the like. However, an extension length of the first groove 110 is enabled to be consistent with an extension length of the outer sheath 100, so that it is easier to quickly tear the outer sheath 100 off from the first groove 110, thereby further improving the installation efficiency of the optical cable.

In addition, the first groove 110 is arranged on the outer sheath 100, and the first groove 110 is arranged in the second radial direction of the main optical fiber 200, that is, the direction y. In this way, after the main optical fiber 200 inside the outer sheath 100 is damaged, the outer sheath 100 may be torn off at the groove on the outer sheath 100, to quickly divide the optical cable into a left part and a right part. In this way, an end portion of any auxiliary optical fiber on two sides of the main optical fiber 200 can be conveniently and quickly exposed, and the end portion of the auxiliary optical fiber is fusion spliced or connected to an FMC connector, to further improve the maintenance efficiency of the optical cable.

A shape of a cross-section of the first groove 110 along a radial direction of the main optical fiber 200 may be any shape such as an inverted trapezoid, a rectangle, a square, and a triangle. For example, referring to FIG. 7, the shape of the cross-section of the first groove 110 in the radial direction of the main optical fiber 200 is a triangle, and an apex of the triangle is located at a bottom of the first groove 110. In this way, it is easier to tear off the outer sheath 100 from the bottom of the first groove 110.

In the foregoing example, the bottom of the first groove 110 with a triangular cross-section may be exactly located in the second radial direction of the main optical fiber 200, that is, the direction y. In this way, the outer sheath 100 may be quickly torn off from the bottom of the first groove 110 to the surface of the main optical fiber 200.

It should be noted that the bottom of the first groove 110 specifically refers to a groove wall opposite to an opening of the first groove 110.

During specific configuration, there may be two first grooves 110, and the two first grooves 110 are respectively arranged on two sides of the main optical fiber 200 along the second radial direction, that is, the direction y. For example, as shown in FIG. 6, one first groove 110 is respectively arranged on an upper side and a lower side of the main optical fiber 200 along the second radial direction, that is, the direction y. In this way, structural strength of a joint between the two first grooves 110 can be reduced, so that it is easier to tear off the outer sheath 100 from the first groove 110.

Referring to FIG. 6 and FIG. 7, to further improve the installation efficiency of the auxiliary optical fiber, in this embodiment of this application, a second groove 120 may be arranged on the outer sheath 100, and the second groove 120 is arranged in the first radial direction of the main optical fiber 200, that is, the direction x. In addition, the second groove 120 is arranged from one end of the outer sheath 100 to the other end of the outer sheath 100 along the extension direction. In other words, the second groove 120 is arranged in the entire extension direction of the outer sheath 100.

Similar to the first groove 110, because the second groove 120 has a specific width, a part of the second groove 120 is usually located in the first radial direction of the main optical fiber 200, that is, the direction x. In other words, the part of the second groove 120 is located in a plane on which an axial cross-section of the main optical fiber 200 along the first radial direction, that is, the direction x, is located.

The first radial direction, that is, the direction x, and the second radial direction, that is, the direction y, are perpendicular to each other. For example, referring to FIG. 7, the first groove 110 is arranged on an upper surface or a lower surface of the outer sheath 100, and the second groove 120 is arranged on a left surface or a right surface of the outer sheath 100.

For example, the second groove 120 is arranged on the left surface of the outer sheath 100. To be specific, the second groove 120 is located on the left side of the main optical fiber 200 along the first radial direction, that is, the direction x. In this way, one of the strength members 300 on the left side of the main optical fiber 200 is arranged as an auxiliary optical fiber. When the main optical fiber 200 is damaged, the left surface of the outer sheath 100 may be quickly torn off from the second groove 120, to quickly expose an end portion of the auxiliary optical fiber, and perform subsequent fusion splicing and the like.

In another example, two second grooves 120 may also be arranged on the outer sheath 100, and the two second grooves 120 are respectively arranged on two sides of the main optical fiber 200 along the first radial direction, that is, the direction x. For example, a second groove 120 is arranged on either of the left surface and the right surface of the outer sheath 100. In this way, when a strength member 300 on either of the left side and the right side of the main optical fiber 200 includes an auxiliary optical fiber, and when the main optical fiber 200 is damaged, the outer sheath 100 may be quickly torn off from either second groove 120, to quickly expose an end portion of the corresponding auxiliary optical fiber, and perform the subsequent fusion splicing and the like.

Referring to FIG. 7, optionally, when two strength members 300 that are in contact with each other are arranged on either of the left side and the right side of the main optical fiber 200 along the first radial direction, that is, the direction x, the two strength members 300 on either side are respectively located on an upper side and a lower side of the axial cross-section of the main optical fiber 200 along the first radial direction, that is, the direction x, and in addition, each strength member 300 is arranged as an auxiliary optical fiber, the outer sheath 100 is torn off from the second groove 120 arranged in the first radial direction of the main optical fiber 200, that is, the direction x. In this way, either of two auxiliary optical fibers on the same side can be quickly exposed and fusion spliced, thereby improving the flexibility of selecting an auxiliary optical fiber.

It can be learned from the foregoing description that, the second groove 120 is arranged on the outer sheath 100 along the first radial direction of the main optical fiber 200, that is, the direction x. In this way, after the main optical fiber 200 inside the outer sheath 100 is damaged, the outer sheath 100 may be quickly torn off from the second groove 120, to quickly expose the auxiliary optical fiber, and perform fusion splicing and the like on the auxiliary optical fiber. This further improves the maintenance efficiency of the optical cable.

The same as the first groove 110, a shape of a cross-section of the second groove 120 in the first radial direction of the main optical fiber 200, that is, the direction x, may be any shape such as an inverted trapezoid, a rectangle, a square, and a triangle. For example, referring to FIG. 7, the shape of the cross-section of the second groove 120 in the first radial direction of the main optical fiber 200, that is, the direction x, is a triangle, and an apex of the triangle is located at a bottom of the second groove 120. In this way, it is easier to tear off the outer sheath 100 from the bottom of the second groove 120.

It should be noted that the bottom of the second groove 120 specifically refers to a groove wall opposite to an opening of the second groove 120.

Referring to FIG. 7, in the foregoing example, the bottom of the second groove 120 with a triangular cross-section may be exactly located in the first radial direction of the main optical fiber 200, that is, the direction x. In this way, the outer sheath 100 is quickly torn off from the bottom of the second groove 120 to a position between the upper and lower strength members 300, so that either of the two strength members 300 located on the same side of the main optical fiber 200 can be quickly exposed.

In the description of embodiments of this application, it should be noted that, unless otherwise explicitly specified and defined, the terms "install", "connect", and "connection" should be understood in a broadest sense, for example, constant connection, indirect connection by a medium, or internal communication between two elements or an interaction relationship between the two elements. A person of ordinary skill in the art may understand specific meanings of the foregoing terms in embodiments of this application based on a specific situation.

In the specification, claims, and accompanying drawings of embodiments of this application, the terms "first", "second", "third", "fourth", and so on (if existent) are intended to distinguish between similar objects but do not necessarily indicate a specific order or sequence.

## Claims

1. An optical cable, comprising an outer sheath, a main optical fiber, and at least two strength members, wherein
the main optical fiber and the strength members are all located inside the outer sheath, and the main optical fiber and the strength members have a same extension direction; and
the at least two strength members are spaced apart on an outer periphery of the main optical fiber, and at least one strength member is an auxiliary optical fiber.

2. The optical cable according to claim 1, wherein the at least two strength members are arranged on two sides of the main optical fiber along a first radial direction, and each strength member is an auxiliary optical fiber.

3. The optical cable according to claim 2, wherein a plurality of strength members located on a same side of the main optical fiber are arranged along a first direction, wherein
there is an angle between the first direction and the first radial direction.

4. The optical cable according to claim 3, wherein the first direction and the first radial direction are perpendicular to each other.

5. The optical cable according to any one of claims 1 to 4, wherein the optical cable further comprises a tight sleeve, and the tight sleeve is sleeved on an outer surface of the main optical fiber; and
the outer sheath and the tight sleeve are both made of transparent materials, and manufacturing materials of the outer sheath and the tight sleeve both comprise any one or more of polyvinyl chloride, nylon, and thermoplastic polyurethane elastomer rubber.

6. The optical cable according to any one of claims 1 to 5, wherein the optical cable further comprises an adhesive layer and an anti-adhesive layer; and
the adhesive layer is arranged on at least a part of a surface of the outer sheath, and the anti-adhesive layer is adhered to a surface of the adhesive layer.

7. The optical cable according to claim 6, wherein at least a part of an outer surface of the outer sheath is configured as a plane, and the adhesive layer is arranged on the plane.

8. The optical cable according to claim 6 or 7, wherein the adhesive layer is a transparent double-sided tape, and the transparent double-sided tape and the outer sheath are integrally formed as an integral part.

9. The optical cable according to any one of claims 4 to 8, wherein a first groove and a second groove are formed on the outer sheath, and the first groove and the second groove are provided from one end of the outer sheath to the other end of the outer sheath along the extension direction, wherein
the first groove is arranged in a second radial direction of the main optical fiber, and the second groove is arranged in the first radial direction of the main optical fiber; and
the first radial direction and the second radial direction are perpendicular to each other.

10. The optical cable according to any one of claims 1 to 9, wherein a width of the outer sheath in the first radial direction of the main optical fiber ranges from 1.5 mm to 2.0 mm, and a height of the outer sheath in the second radial direction of the main optical fiber ranges from 1.2 mm to 1.9 mm, wherein
the first radial direction and the second radial direction are perpendicular to each other.
